(19) Europäisches Patentamt
European Patent Office
Office européen des brevets

(11) **EP 1 102 971 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(51) Int Cl.⁷: **G01L 3/10**, G01L 5/22, G01D 5/04, G01D 5/16, G01D 5/245

(21) Anmeldenummer: **99950455.8**

(22) Anmeldetag: **29.07.1999**

(86) Internationale Anmeldenummer:
**PCT/DE1999/002331**

(87) Internationale Veröffentlichungsnummer:
**WO 2000/008434 (17.02.2000 Gazette 2000/07)**

(54) **SENSORANORDNUNG ZUR ERFASSUNG EINES DREHWINKELS UND/ODER EINES DREHMOMENTS**

SENSOR ARRAY FOR DETECTING ROTATION ANGLE AND/OR TORQUE

SYSTEME DETECTEUR PERMETTANT DE DETECTER UN ANGLE DE ROTATION ET/OU UN COUPLE DE ROTATION

(84) Benannte Vertragsstaaten:
**DE FR IT**

(30) Priorität: **07.08.1998 DE 19835694**

(43) Veröffentlichungstag der Anmeldung:
**30.05.2001 Patentblatt 2001/22**

(73) Patentinhaber: **ROBERT BOSCH GMBH**
**70442 Stuttgart (DE)**

(72) Erfinder: **MOERBE, Matthias**
**D-74360 Ilsfeld-Helfenberg (DE)**

(56) Entgegenhaltungen:
**DE-A- 19 506 938        US-A- 4 450 729**

**Beschreibung**

Stand der Technik

Die Erfindung betrifft eine Sensoranordnung zur Erfassung eines Drehwinkels und/oder eines Drehmoments, insbesondere an Achsen oder Wellen, und ein Verfahren zur Durchführung dieser Erfassung, nach dem Oberbegriff des Hauptanspruchs.

Es ist bereits aus der US-PS 5,501,110 eine Sensoranordnung bekannt, bei der das auf eine Achse übertragene Drehmoment erfasst werden soll. Das Drehmoment wird aus der Torsion bzw. dem Drehwinkelversatz der Achsenden und einer Elastizitäts-Konstante, die vom Material und der Geometrie der Achse abhängt, bestimmt. Es sind hierbei zwei Magnete und jeweils ein den Magneten gegenüberliegender Hall-Sensor auf zwei sich jeweils mit der Achse drehenden Scheiben angebracht, die an die Achsenden mechanisch fest angekoppelt sind.

Beispielsweise zur Erfassung des auf eine Lenkradachse eines Kraftfahrzeuges wirkenden Drehmomentes während der Drehung des Lenkrades müssen dabei sehr kleine Winkeländerungen in beiden Drehrichtungen des Lenkrades gemessen werden. Bei der Auswertung der Feldänderungen des von den Magneten ausgehenden Feldes ist daher bei der bekannten Anordnung eine äußerst empfindliche und auch temperaturstabile Messanordnung erforderlich.

Das Drehmoment in der rotierenden Lenkradspindel ist eine Schlüsselgröße für viele Regelungs- und Steuerungsaufgaben im Kraftfahrzeug. Beispielsweise in Fahrzeugsystemen wie bei der elektromotorischen Servolenkung, der sog. Adaptive Cruise Control und der Fahrdynamikregelung ist die Erfassung der beiden Größen des absoluten Lenkraddrehwinkels und des Drehmoments an der Lenkspindel oft notwendig.

Das Drehmoment kann im Prinzip auf verschiedene, für sich gesehen bekannte, Arten erfasst werden. Die mechanische Spannung im tordierten Material ist zunächst die direkte Messgröße für das Drehmoment, die Dehnung oder die Stauchung. Diese mechanische Spannung kann zum Beispiel mit Dehnmessstreifen, die in gewünschter Richtung aufgebracht sind, gemessen werden. Es besteht allerdings bei rotierenden Wellen das Problem der Signalübertragung, das zwar je nach Anwendung mit einem Drehübertrager oder mit Schleifringen gelöst werden kann, sehr jedoch kostenintensiv und störanfällig ist.

Mechanische Spannungen lassen sich, auch in an sich bekannter Weise, mit magnetoelastischen Materialien berührungslos erfassen. Eine dauerhafte Verbindungstechnik zwischen magnetoelastischen Folien und der Torsionswelle ist jedoch außerordentlich schwierig herzustellen. Es gibt weiterhin verschiedene Methoden einen Messwinkel durch den Drehwinkelversatz zwischen verschiedenen Enden der Welle zu erfassen. Dieser Messwinkel kann beispielsweise durch Verfahren auf optischer oder Wirbelstrombasis erfasst werden. Die optischen Verfahren haben meistens den Nachteil, daß sie inkremental den Winkel erfassen und aus der Differenz der Triggerzeitpunkte, also nur dynamisch, den Winkel und somit das Drehmoment ermitteln.

Für sich gesehen ist aus der DE 195 06 938 A1 (US-Ser.No.08/894453) bekannt, dass eine absolute Winkelmessung an einer drehbaren Welle dadurch vorgenommen wird, dass die Welle, deren Winkellage ermittelt werden soll, mit einem Zahnrad oder einem Zahnkranz versehen ist. Dieses Zahnrad oder der Zahnkranz wirkt mit zwei weiteren, benachbart angeordneten Zahnrädern zusammen, deren jeweilige Winkelstellungen mit Hilfe eines Sensors laufend ermittelt werden, wobei der letztlich zu bestimmende Drehwinkel der Welle aus den beiden gemessenen Winkel mit einer geeigneten Berechnungsmethode ermittelbar ist.

Vorteile der Erfindung

Die eingangs erwähnte gattungsgemäße Sensoranordnung zur Erfassung des Drehwinkels- und/oder des Drehmoments an rotierenden mechanischen Bauteilen, ist gemäß des Kennzeichens des Anspruchs 1 in vorteilhafter Weise mit zwei erfindungsgemäß weitergebildeten Winkelgebern versehen, die an verschiedenen Stellen auf dem Bauteil angeordnet sind, wobei dazwischen ein Torsionsstab gebildet ist.

In einer für sich gesehen aus der DE 195 06 938 A1 (US-Serial No. 08/894453) bekannten Weise sind am ersten Winkelgeber auf dem Umfang des rotierenden Bauteils zwei mit etwas unterschiedlicher Umdrehungsgeschwindigkeit ortsfest mitdrehende Körper angeordnet, deren Drehwinkel $\psi$ und $\theta$ mit den Sensoren erfassbar sind und aus deren Drehwinkeldifferenz die absolute Drehwinkellage $\varphi$ des rotierenden Bauteils herleitbar ist.

Gemäß der Erfindung greift der zweite Winkelgeber am anderen Ende des Torsionsstabes an, wobei auf einer Hülse entsprechend dem ersten Winkelgeber ebenfalls ein ortsfest drehender Körper angreift, der in seinen Abmessungen entsprechend einem der drehenden Körper am ersten Winkelgeber ausgebildet ist. Aus der gemessenen Drehwinkeldifferenz des drehbaren Körpers des zweiten Winkelgebers und des gleich ausgeführten drehbaren Körpers des ersten Winkelgebers ist nunmehr auf einfache Weise das Drehmoment am rotierenden Bauteil herleitbar, da beide Winkelgeber durch eine vom Drehmoment verursachte Torsion gegeneinander verschoben werden.

Beim einer vorteilhaften erfindungsgemäßen Ausführungsform ist der erste Winkelgeber mit Winkelmarken oder ineinandergreifende Verzahnungen auf dem Umfang des rotierenden Bauteils versehen, in gleicher Weise wie die drehenden Körper. Auch der zweite Winkelgeber ist mit Winkelmarken oder ineinandergreifende Verzahnungen auf dem Umfang einer Hülse und des drehbaren Körpers versehen. Die Zahl n der Zähne oder Winkelmarken auf dem rotierenden Bauteil und der Hülse stimmen dabei überein. Auch die Zahl m der Zähne oder Winkelmarken auf dem drehenden Körper und einem der drehenden Körper am ersten Winkelgeber sind übereinstimmend ausgeführt. Besonders bevorzugt differieren die Zahl m der Zähne oder Winkelmarken der beiden drehenden Körper am ersten Winkelgeber um einen Zahn oder eine Winkelmarke.

Bei einem vorteilhaften Verfahren zur Ermittlung des Drehwinkels und/oder des Drehmomentes kann mit der erfindungsgemäßen Sensoranordnung für jede Position des rotierenden Bauteils durch Auswertung der Drehwinkel $\psi$ und $\theta$ der drehbaren Körper am ersten Winkelgeber ein erster Wert k1 ermittelt werden. Durch Auswertung des Drehwinkels des drehbaren Körpers am zweiten Winkelgeber kann ein zweiter Wert k2 ermittelt werden. Das Verhältnis der Werte k1 und k2 wird dabei überwacht, wobei bei einem sich änderndem Verhältnis und einer Änderung der Winkeldifferenz zwischen den jeweils gleichen drehbaren Körpern am zweiten Winkelgeber und am ersten Winkelgeber ein Drehmoment erfasst wird.

Die Sensoren, die die Winkellage der drehbaren Körper ermitteln, können in vorteilhafter Weise magnetoresistive AMR-, CMR- oder GMR-Sensoren sein, die ein im wesentlichen von der Feldlinienrichtung der mit den drehbaren Körpern verbundenen Magnete abhängiges Signal abgeben. Diese Sensoren erlauben einen Einsatz auch bei geringem Bauraum und machen eine einfache elektronische Auswertung, gegebenenfalls nach einer Analog-Digital-Wandlung, möglich. Die Auswerteschaltung kann hierbei eine Hybridschaltung sein, die die magnetoresistiven Sensoren und eine Rechenschaltung zur Auswertung der gemessenen Winkellagen enthält.

Bei einer bevorzugten Ausführungsform ist das rotierende Bauteil die Lenkspindel eines Kraftfahrzeuges, auf der der erste und der zweite Winkelgeber angebracht sind. Auch hier ist durch die einfach anzubringende Verzahnung an der Lenkspindel und die Ausbildung eines Torsionsstabes mit einer weiteren Verzahnung eine erfindungsgemäße Sensoranordnung mit relativ geringem Bauraum herstellbar. In der Bandendkontrolle bei der Kraftfahrzeugfertigung werden dabei die Winkeldifferenzen und die oben beschriebenen Werte k1 und k2 sowie deren Verhältnis zueinander bei einer Geradeausfahrt drehmomentfrei erfasst und gespeichert. Bei der folgenden Überwachung der Werte k1 und k2 können dann diese Speicherwerte als Referenz herangezogen werden.

## Zeichnung

Ein Ausführungsbeispiel der erfindungsgemäßen Sensoranordnung wird anhand der Zeichnung erläutert. Es zeigen:

Figur 1 eine schematische Ansicht einer Sensoranordnung zur Erfassung der absoluten Winkelstellung einer Achse nach dem Stand der Technik und

Figur 2 eine Schnittansicht einer Sensoranordnung mit einem Torsionsstab zur Erfassung der Winkelstellung und des auf die Achse wirkenden Drehmomentes nach der Erfindung.

## Beschreibung des Ausführungsbeispiels

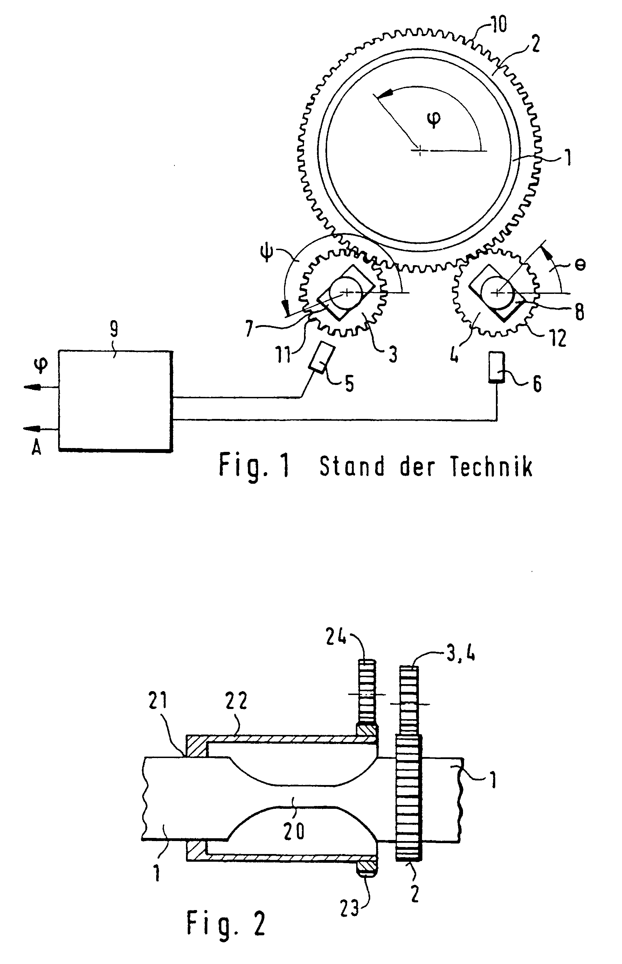

In Figur 1 ist in einer schematischen Ansicht eine Achse 1 als rotierendes Bauelement gezeigt, deren Drehwinkel $\varphi$ in einer an sich aus der Beschreibungseinleitung der DE 195 06 938 A1 (US-Serial No. 08/894453) bekannten Art und Weise bestimmt werden soll. Auf dem Umfang der Achse 1 ist eine Verzahnung 2 mit einer Anzahl n Zähnen angebracht. In die Verzahnung 2 greifen die Zähne eines Zahnrades 3 und eines Zahnrades 4 als weiterer drehbare Körper ein. Das Zahnrad 3 hat bei diesem Beispiel eine Anzahl m Zähne und das Zahnrad 4 hat eine Anzahl m+1 Zähne. Beim Zahnrad 3 wird ein Drehwinkel $\psi$ und beim Zahnrad 4 ein Drehwinkel $\theta$ gemessen.

Die Messung dieser Drehwinkel $\psi$ und $\theta$ erfolgt hier berührungslos mittels sog. magnetoresistiver Sensoren 5 und 6 durch eine Erkennung der Magnetfeldverläufe, die von Magneten 7 und 8 auf den Zahnrädern 3 und 4 hervorgerufen werden. Die Sensoren 5 und 6 sind mit einer elektronischen Auswerteschaltung 9 verbunden, in der die zur Bestimmung des Drehwinkels $\varphi$ erforderlichen und für sich gesehen aus dem erwähnten Stand der Technik bekannten Berechnungsschritte anlaufen.

Zur Berechnung der absoluten Winkellage der Achse 1 sind die Sensoren 5 und 6 als Absolutsensoren ausgeführt, d.h. sofort nach Inbetriebnahme der Anordnung ist der vorliegende Drehwinkel der Zahnräder 3 und 4 bekannt. Aus diesen Winkeln kann somit sofort der momentane Drehwinkel $\varphi$ der Achse 1 bestimmt werden, sofern die Zahl der Zähne 10 der Verzahnung 2 auf der Achse 1 und die Zahl der Zähne 11 auf dem Zahnrad 3 und der Zähne 12 auf dem Zahnrad 4 bekannt ist. Je nach der Größe des zu erfassenden Winkels $\varphi$ kann die Anzahl der Zähne 10, 11 und 12 entsprechend gewählt werden.

Für einen absoluten Winkelerfassungsbereich von $\varphi = 3600°$ und einen Messbereich $\Omega$ der beiden Sensoren 5 und 6 von 360° und einer erforderlichen Genauigkeit von 1° muss die Anzahl der Zähne der Verzahnung 2 n = 87 sein, die Anzahl der Zähne m muss dann = 29 sein. Mit einer solchen Verzahnung lässt sich somit ein Winkelbereich von 3600° so erfassen, dass für die Drehwinkel $\psi$ und $\theta$ der Zahnräder 3 und 4 eindeutige Zuordnungen möglich sind. Für die Berechnung des absoluten Drehwinkels $\varphi$ innerhalb des Winkelbereichs von hier 3600° lässt sich somit zunächst ein Wert k wie folgt bestimmen:

$$k = \frac{(m+1) * \theta - m * \psi}{\Omega} \qquad (1).$$

Die Winkel $\psi$ und $\theta$ sind dabei zuvor mit den Sensoren 5 und 6 gemessen worden. Der Drehwinkel $\varphi$ lässt sich danach mit folgender Gleichung bestimmen:

$$\varphi = \frac{m * \psi + (m+1) * \theta - (2m+1) * k * \Omega}{2n} \qquad (2).$$

Aus Figur 2 ist ein erfindungsgemäßes Ausführungsbeispiel einer Sensoranordnung an der Achse 1, z.B. die Lenkspindel eines Kraftfahrzeuges, gezeigt, bei dem im Verlauf der Achse 1 ein Torsionsstab 20 zur Drehmomentenmessung gebildet ist. Die in der Figur 1 schon gezeigte Verzahnung 2 ist hier an dem ersten Winkelgeber an der Achse 1 angebracht. In die Verzahnung 2 greifen Zahnräder 3 und 4 analog zur Darstellung nach der Figur 1 ein. Von einer anderen Befestigungsstelle 21 ragt zur Bildung des zweiten Winkelgebers eine Hülse 22 zu der ersten Befestigungsstelle zurück und trägt auf dem freien Ende eine Verzahnung 23, die die gleiche Zähnezahl n wie die Verzahnung 2 aufweist.

In die Verzahnung 23 greift ein Zahnrad 24 ein, das eine gleiche Zähnezahl m oder m+1 wie das Zahnrad 3 oder 4 aufweist und ebenfalls mit einem hier nicht ersichtlichen Magneten und einem entsprechenden Sensor ausgestattet ist. Wirkt nunmehr auf den Torsionsstab 20 ein Drehmoment so verdrehen sich die Verzahnungen 2 und 23 gegeneinander und somit ergibt sich auch eine unterschiedliche Drehung des Zahnrades 24 im Verhältnis zum Zahnrad 3 oder 4 mit der gleichen Zähnezahl. Es kann nunmehr aus der Winkeländerung zwischen dem Zahnrad 24 und dem Zahnrad 3 oder 4 das einwirkende Drehmoment berechnet werden, in gleicher Weise wie nach der obigen Beschreibung der Absolutwert des Drehwinkels $\varphi$ bestimmt wird.

Die Bestimmung eines Wertes k1 erfolgt in gleicher Weise wie die Errechnung des Wertes k nach der Formel (1) aus den Winkellagen der Zahnräder 3 und 4. Wenn auf die Achse 1 kein Drehmoment ausgeübt wird, so ergibt auch eine Berechnung eines Wertes k2 nach der beschriebenen Methode unter Zugrundelegung des Drehwinkels des Zahnrades 24 anstatt des gleich ausgeführten Zahnrades 3 oder 4 einen eindeutigen Wert, der immer im gleichen Verhältnis zu dem Wert k1 steht. Wenn sich nunmehr eine Änderung des Verhältnisses von k1 zu k2 ergibt, so wird dies durch eine Änderung der Winkeldifferenz zwischen dem Zahnrad 24 und dem gleichzahligen Zahnrad 3 oder 4 hervorgerufen. Diese Änderung der Winkeldifferenz ist dabei durch ein auf die Achse wirkendes Drehmoment hervorgerufen und kann in der Auswerteschaltung 9 in ein entsprechendes Ausgangssignal umgewandelt werden.

**Patentansprüche**

1. Sensoranordnung zur Erfassung des Drehwinkelsund/oder des Drehmoments an rotierenden mechanischen Bauteilen (1), mit

- mindestens einem Sensor (5,6) im Bereich von Winkelgebern (2,3,4,23,24), die mechanisch jeweils an, in axialer Richtung unterschiedlichen Stellen, am rotierenden Bauteil (1) befestigt sind, wobei die Winkelgeber (2,3,4,23, 24) und Sensoren (5,6) derart angeordnet sind, dass eine Torsion des Bauteils (1) als relative Winkeländerung zwischen den Winkelgebern (2,3,4,23,24) erfassbar ist, wobei

- zwischen den Befestigungsstellen der Winkelgeber (2,3,4,23,24) ein Torsionsstab (20) gebildet ist, wobei

 - am ersten Winkelgeber (2,3,4) auf dem Umfang des rotierenden Bauteils (1) zwei mitdrehbare Körper (3,4) so angeordnet sind, dass sie sich im Betrieb mit unterschiedlicher Umdrehungsgeschwindigkeit mitdrehen, wobei die Drehwinkel ($\psi,\theta$) der Körper (3,4) mit den Sensoren erfassbar sind und aus deren Drehwinkeldifferenz die absolute Drehwinkellage ($\varphi$) des rotierenden Bauteils (1) herleitbar ist und

 - der zweite Winkelgeber (22,23,24) am anderen Ende des Torsionsstabes (20) angreift und auf einer Hülse (22) entsprechend dem ersten Winkelgeber (2,3,4) ein drehbarer Körper (24) angreift, der entweder dem einen drehbaren Körper (3) oder dem anderen (4) am ersten Winkelgeber (2,3,4) entspricht und dass

- aus der Drehwinkeldifferenz des drehbaren Körpers (24) des zweiten Winkelgebers (23,24) und des gleich ausgeführten drehbaren Körpers (3) oder (4) des ersten Winkelgebers (2,3,4) das Drehmoment herleitbar ist.

2. Sensoranordnung nach Anspruch 1, wobei

- der erste Winkelgeber (2,3,4) mit Winkelmarken oder ineinandergreifende Verzahnungen auf dem Umfang des rotierenden Bauteils (1) und der drehbaren Körper (3,4) sowie der zweite Winkelgeber (22,23,24) mit Winkelmarken oder ineinandergreifende Verzahnungen auf dem Umfang der Hülse (22) und des drehbaren Körpers (34) versehen ist, wobei

 - die Zahl, n, der Zähne oder Winkelmarken auf dem rotierenden Bauteil (1) und der Hülse (22) übereinstimmen und die Zahl, m, der Zähne oder Winkelmarken auf dem drehenden Körper (24) und einem der drehenden Körper (2,3) am ersten Winkelgeber (2,3,4) übereinstimmen.

3. Sensoranordnung nach Anspruch 2, wobei

- die Zahl, m, der Zähne oder Winkelmarken der beiden drehenden Körper (3,4) am ersten Winkelgeber (2,3,4) um einen Zahn oder eine Winkelmarke differieren, m+1.

4. Sensoranordnung nach einem der vorhergehenden Ansprüche, wobei

- die Sensoren (5,6), die die Winkellage der drehbaren Körper (2,3,24) ermitteln, magnetoresistive AMR-, CMR oder GMR-Sensoren sind, die ein im wesentlichen von der Feldlinienrichtung der mit den drehbaren Körpern (2,3,24) verbundenen Magnete (7,8) abhängiges Signal abgeben und dass

- in einer Auswerteschaltung (9) aus diesen Signalen der absolute Drehwinkel ($\varphi$) des rotierenden Bauteils (1) und das auf das rotierende Bauteil (1) einwirkende Drehmoment ermittelbar ist.

5. Sensoranordnung nach Anspruch 4, wobei

- die Auswerteschaltung (9) eine Hybridschaltung ist, die die magnetoresistiven Sensoren (7,8) und eine Rechenschaltung zur Auswertung der gemessenen Winkel enthält.

6. Sensoranordnung nach einem der vorhergehenden Ansprüche, wobei

- das rotierende Bauteil (1) die Lenkspindel eines Kraftfahrzeuges ist, auf der die Winkelgeber (2,3,4,23, 24) angebracht sind.

7. Verfahren zur Ermittlung des Drehwinkels und/oder des Drehmomentes mit einer Sensoranordnung nach einem der Ansprüche 4 bis 6, wobei

- für jede Position des rotierenden Bauteils (1) durch Auswertung der Drehwinkel ($\psi,\theta$) der drehbaren Körper (2,3) am ersten Winkelgeber (2,3,4) eine erster Wert, k1 ermittelt wird, dass

- durch Auswertung des Drehwinkels des drehbaren Körpers (24) am zweiten Winkelgeber (23,24) ein zweiter Wert, k2 ermittelt wird und dass

- das Verhältnis der Werte k1 und k2 überwacht wird,

wobei bei einem sich änderndem Verhältnis und einer Änderung der Winkeldifferenz zwischen den jeweils gleichen drehbaren Körpern (24) am zweiten Winkelgeber und (3) am ersten Winkelgeber oder (24) am zweiten Winkelgeber und (4) am ersten Winkelgeber ein Drehmoment erfasst wird.

**Claims**

1. Sensor array for sensing the angle of rotation and/ or the torque on rotating mechanical components (1), having

- at least one sensor (5, 6) in the region of angular sensors (2, 3, 4, 23, 24) which are each mechanically attached to the rotating component (1) at different locations in the axial direction, the angular sensors (2, 3, 4, 23, 24) and sensors (5, 6) being arranged in such a way that torsion of the component (1) can be sensed as a relative change in angle between the angular sensors (2, 3, 4, 23, 24),

- a torsion bar (20) being formed between the attachment points of the angular sensors (2, 3, 4, 23, 24),

  - two bodies (3, 4) which can also rotate being arranged on the first angular sensor (2, 3, 4) on the circumference of the rotating component (1) in such a way that they also rotate with a different rotational speed during operation, it being possible to sense the angles of rotation ($\psi$, $\theta$) of the bodies (3, 4) with the sensors and to derive the absolute angle-of-rotation position ($\varphi$) of the rotating component (1) from the angle-of-rotation difference of said sensors, and

  - the second angular sensor (22, 23, 24) gauging on the other end of the torsion bar (20), and a rotatable body (24), which corresponds either to one rotatable body (3) or to the other (4) on the first angular sensor (2, 3, 4) acting on a sleeve (22) in accordance with the first angular sensor (2, 3, 4), and

- it being possible to derive the torque from the angle-of-rotation difference of the rotatable body (24) of the second angular sensor (23, 24) and of the rotatable body (3) or (4), of identical design, of the first angular sensor (2, 3, 4).

**2.** Sensor array according to Claim 1,

- the first angular sensor (2, 3, 4) being provided with angular marks or toothings which engage one in the other on the circumference of the rotating component (1) and of the rotatable bodies (3, 4), and the second angular sensor (22, 23, 24) being provided with angular marks or toothings which engage one in the other on the circumference of the sleeve (22) and of the rotatable component (34),

  - the number, n, of teeth or angular marks on the rotating component (1) and the sleeve (22) corresponding, and the number, m, of the teeth or angular marks on the rotating body (24) and one of the rotating bodies (2, 3) on the first angular sensor (2, 3, 4) corresponding.

**3.** Sensor array according to Claim 2,

- the number, m, of teeth or angular marks of the two rotatable bodies (3, 4) on the first angular sensor (2, 3, 4) differing by one tooth or one angular mark, m+1.

**4.** Sensor array according to one of the preceding claims,

- the sensors (5, 6) which determine the angular position of the rotatable bodies (2, 3, 24) being magneto-resistive AMR, CMR or GMR sensors which output a signal which is essentially dependent on the field line direction of the magnets (7, 8) which are connects to the rotatable bodies (2, 3, 24), and
- it being possible to determine the absolute angle of rotation ($\varphi$) of the rotating component (1) and the torque acting on the rotating component (1) from these signals in an evaluation circuit (9).

**5.** Sensor array according to Claim 4,

- the evaluation circuit (9) being a hybrid circuit which contains the magneto-resistive sensors (7, 8) and an arithmetic circuit for evaluating the measured angles.

**6.** Sensor array according to one of the preceding claims,

- the rotating component (1) being the steering spindle of a motor vehicle on which the angular sensors (2, 3, 4, 23, 24) are mounted.

**7.** Method for determining the angle of rotation and/or the torque with a sensor array according to one of Claims 4 to 6,

- a first value, k1, being determined for each position of the rotating component (1) by evaluating the angles of rotation ($\psi$, $\theta$) of the rotatable bodies (2, 3) on the first angular sensor (2, 3, 4),
- a second value, k2, being determined by evaluating the angle of rotation of the rotatable body (24) at the second angular sensor (23, 24), and
- the ratio between the values k1 and k2 being monitored, a torque being sensed when there is a change in ratio and a change in the angular difference between the respective identical rotatable bodies (24) at the second angular sensor and (3) at the first angular sensor or (24) at the second angular sensor and (4) at the first angular sensor.

**Revendications**

**1.** Système de capteurs pour détecter l'angle de rotation et/ou le couple de rotation au niveau de composants (1) mécaniques en rotation, comprenant :

- au moins un capteur (5, 6) dans la zone de capteurs d'angles (2, 3, 4, 23, 24) respectivement fixés par des moyens mécaniques à différents points dans le sens axial sur le composant en rotation (1), les capteurs d'angles (2, 3, 4, 23, 24) et les capteurs (5, 6) étant disposés de telle sorte qu'une torsion du composant (1) peut être détectée comme un changement d'angle relatif entre les capteurs d'angles (2, 3, 4, 23, 24), dans lesquels :

  - une barre de torsion (20) formée entre les points de fixation des capteurs d'angles (2, 3, 4, 23, 24) et,
  - deux corps (3, 4) rotatifs au niveau du premier capteur d'angle (2, 3, 4) à la circonférence du composant en rotation (1), disposés de telle sorte que pendant le fonctionnement il tournent à des vitesses de rotation différentes, les angles de rotation ($\Psi$, $\theta$) des corps (3, 4) pouvant être détectés par les capteurs et à partir de la différence d'angles de rotation de ceux-ci la position d'angle de rotation absolue ($\varphi$) du composant en rotation (1) peut en être déduite, et
  - le deuxième capteur d'angle (22, 23, 24) intervient à l'autre extrémité de la barre de torsion (20), et sur une douille (22) correspondant au premier capteur d'angle (2, 3, 4) intervient un corps rotatif (24), qui correspond soit à l'un des corps rotatifs (3) soit à l'autre (4) au niveau du premier capteur d'angle (2, 3, 4), et

- le couple de rotation peut être déduit de la différence d'angles de rotation du corps rotatif (24) du deuxième capteur d'angle (23, 24) et du corps rotatif (3) ou (4) de forme identique du premier capteur d'angle (2, 3, 4).

2. Système de capteurs selon la revendication 1, dans lequel :

- le premier capteur d'angle (2, 3, 4) est muni de marques angulaires ou de dentures engrenées situées à la circonférence du composant en rotation (1) et des corps rotatifs (3, 4), et le deuxième capteur d'angle (22, 23, 24) est muni de marques angulaires ou de dentures engrenées situées à la circonférence de la douille (22) et du corps rotatif (34),
- le nombre, n, des dents ou des marques angulaires sur le composant en rotation (1) et sur la douille (22) coïncidant, et le nombre, m, des dents ou des marques angulaires sur le corps rotatif (24) et sur l'un des corps rotatifs (2, 3) au niveau du premier capteur d'angle (2, 3, 4) coïncidant.

3. Système de capteurs selon la revendication 2, dans lequel :

- le nombre, m, des dents ou des marques angulaires des deux corps rotatifs (3, 4) au niveau du premier capteur d'angle (2, 3, 4) est différent d'une dent ou d'une marque angulaire, m+1.

4. Système de capteurs selon l'une quelconque des revendications précédentes, dans lequel :

- les capteurs (5, 6) qui déterminent la position angulaire des corps rotatifs (2, 3, 24) sont des capteurs AMR, CMR ou GMR magnétorésistifs qui émettent un signal pour l'essentiel en fonction de la direction de lignes de champ des aimants (7, 8) reliés aux corps rotatifs (2, 3, 24), et
- dans un circuit d'exploitation (9) l'angle de rotation absolu ($\varphi$) du composant en rotation (1) et le couple de rotation qui agit sur le composant en rotation (1) peut être déterminé à partir de ces signaux.

5. Système de capteurs selon la revendication 4, dans lequel

- le circuit d'exploitation (9) est un circuit hybride comprenant les capteurs magnétorésistifs (7, 8) et un circuit calculateur pour l'exploitation des angles mesurés.

6. Système de capteurs selon l'une quelconque des revendications précédentes, dans lequel

- le composant en rotation (1) est l'arbre de direction d'un véhicule automobile sur lequel les capteurs d'angles (2, 3, 4, 23, 24) sont disposés.

7. Procédé pour déterminer l'angle de rotation et/ou le couple de rotation à l'aide d'un système de capteurs selon l'une quelconque des revendications 4 à 6, dans lequel :

- pour chaque position du composant en rotation (1) une première valeur, k1, est déterminée par exploitation des angles de rotation ($\Psi$, $\theta$) des corps rotatifs (2, 3) au niveau du premier capteur d'angle (2, 3, 4), et
- une deuxième valeur, k2, est déterminée par exploitation de l'angle de rotation du corps rotatif (24) au niveau du deuxième capteur d'angle (23, 24), et
- le rapport des valeurs k1 et k2 étant surveillé, un couple de rotation est détecté en cas d'un changement du rapport et d'un changement de la différence angulaire entre les mêmes corps rotatifs (24) au niveau du deuxième capteur d'angle et (3) au niveau du premier capteur d'angle ou (24) au niveau de deuxième capteur d'angle et (4) au niveau du premier capteur d'angle.

Fig. 1   Stand der Technik

Fig. 2